(19) Europäisches Patentamt
European Patent Office
Office européen des brevets

(11) **EP 1 855 796 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **06701010.8**

(22) Anmeldetag: **18.01.2006**

(51) Int Cl.:
***B01J 19/00*** *(2006.01)*

(86) Internationale Anmeldenummer:
**PCT/EP2006/000388**

(87) Internationale Veröffentlichungsnummer:
**WO 2006/079470 (03.08.2006 Gazette 2006/31)**

(54) **VORRICHTUNG UND IHRE VERWENDUNG ZUR KONTINUIERLICHEN DURCHFÜHRUNG PHOTOCHEMISCHER PROZESSE**

DEVICE AND ITS USE FOR CONTINUOUSLY CARRYING OUT PHOTOCHEMICAL PROCESSES

DISPOSITIF ET SON UTILISATION POUR METTRE EN OEUVRE EN CONTINU DES PROCEDES PHOTOCHIMIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.01.2005 DE 102005003966**

(43) Veröffentlichungstag der Anmeldung:
**21.11.2007 Patentblatt 2007/47**

(73) Patentinhaber: **Ehrfeld Mikrotechnik BTS GmbH
55234 Wendelsheim (DE)**

(72) Erfinder:
- **EHRFELD, Wolfgang
55124 Mainz (DE)**
- **SCHAEL, Frank
64293 Darmstadt (DE)**
- **KOCH, Oliver
55128 Mainz (DE)**

(74) Vertreter: **Lütjens, Henning
Bayer Business Services GmbH
Law and Patents
Patents and Licensing
51368 Leverkusen (DE)**

(56) Entgegenhaltungen:
**EP-A- 1 415 707**
**WO-A-02/11880**
**US-A- 5 543 016**
**US-A1- 2003 042 126**
**US-A1- 2003 118 486**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 855 796 B1

**Beschreibung**

Die Erfindung betrifft eine Vorrichtung zur kontinuierlichen Durchführung photochemischer Prozesse, mit der eine Bestrahlung geringer optischer Schichtdikken unter enger Verteilzeitverteilung und hohen Durchflussraten ermöglicht wird.

Photochemische Reaktionen lassen sich besonders vorteilhaft mit Hilfe der Mikroreaktionstechnik durchführen. Bei der Mikroreaktionstechnik werden für die Grundoperationen der Verfahrenstechnik Bauelemente eingesetzt werden, deren kleinste charakteristische Abmessungen typischerweise im Bereich von einigen Mikrometern bis zu wenigen Millimetern liegen. Besonders vorteilhaft sind kleine Dimensionen, wenn bei verfahrenstechnischen Apparaten Stoff-, Wärme-, und/ oder Strahlungstransport realisiert werden sollen. Die technisch sinnvolle Durchführung von photochemischen Reaktionen, bei denen Strahlungstransportvorgänge zentrale Schritte sind, erfordert vor allem die wirtschaftlich optimale Ausnutzung der eingesetzten Strahlquellen. Dazu ist die in die Lösung eindringende Strahlung optimal auszunutzen, um einerseits keine Strahlung ungenutzt zu lassen, andererseits aber die zu bestrahlende Ausgangslösung möglichst quantitativ umzusetzen. Nach dem Lambert-Beerschen Gesetz ist die Extinktion abhängig von der optischen Schichtdicke, der Konzentration und des Extinktionskoeffizienten der absorbierenden Spezies. Herkömmliche Photoreaktoren arbeiten mit relativ großen Volumina und rühren üblicherweise das Prozessmedium, so dass in der Nähe einer transparenten Wand, durch die die Strahlung eingebracht wird, ein möglichst hoher Austausch des Prozessmediums erreicht wird. Zudem werden Photoreaktoren häufig im Kreislauf betrieben. Die beschriebenen Ausführungen führen dazu, dass meistens experimentell ein Kompromiss zwischen der Bestrahlungsdauer und der einsetzbaren maximalen Konzentration des Ausgangsstoffes gesucht werden muss.

Eine Verbesserung der Leistungsfähigkeit besteht in der räumlichen Begrenzung des zu bestrahlenden Prozessmediums in der Form, dass nur eine Flüssigkeitsschicht solcher Dicke bestahlt wird, über die die Strahlung vom dem/den Ausgangsstoff/en bei der einzusetzenden Konzentration vollständig über die gesamte Eindringtiefe im Prozessmedium absorbiert wird. Die optimale Schichtdicke $d_{90\%}$, bei der 90 % der einfallenden Strahlung absorbiert wird, kann aus dem Lambert-Beerschen Gesetz berechnet werden:

$$d_{90\%} = 1/(\varepsilon\, c)$$

($\varepsilon$ = Extinktionskoeffizient, c = Konzentration)

Im Stand der Technik ist eine Reihe von Photoreaktoren bekannt. So sind aus DE A 10341500.9 Photoreaktoren mit engen Schichtdicken in Verbindung mit einer erzwungenen Anströmung der Mikrokanäle von unten nach oben (Steigfilm) zur Erzeugung einer engen Verweilzeitverteilung und Hochleistungs-Leuchtdioden als Bestrahlungsquellen beschrieben.

In EP 1 415 707 A1 wird ein mikrofluidischer Photoreaktor mit in den Fluidstrom eingebrachten, photokatalytischen Elementen beschrieben. Aus DE 102 09 898 A1 sind Photoreaktoren mit planarer transparenter Abdeckung zur Durchführung von heterogen-katalysierten chemischen Reaktionen in beschichteten Kanälen von vorzugsweise 100 bis 500 μm Durchmesser beschrieben.

In US 2003/0118 486 A1 wird eine Anordnung zur Durchführung von parallelen chemischen Reaktionen in Kanälen von 10 bis 5000 μm Breite beschrieben. Im Wesentlichen werden dort zunächst photochemische Durchflusszellen und anschließend (unbestrahlte) Reaktionskammern vom Reaktionsfluid in einer zwei- oder dreidimensionalen Anordnung durchströmt.

EP14002 80A1 wird ein Mikroreaktor beschrieben, der in einem Druckbehälter untergebracht ist. Dadurch wird eine mögliche Druckdifferenz zwischen dem Innenraum des Reaktors und der Umgebung und damit mögliche Verformungen der Mikrokanäle bei hohen Durchflussraten zwar vermieden. Nach dem Stand der Technik ist die Unterbringung von geeigneten Bestrahlungsquellen hinreichender Leistung innerhalb eines Druckbehälters, wodurch photochemische Anwendungen des beschriebenen Apparates erst möglich wären, nur mit erheblichen technischen Aufwand möglich.

US2004/0241046A1 beschreibt den Aufbau eines Mikroreaktors mit transparenter Abdeckung, der für photochemische Anwendung zwar geeignet ist, aber bei höheren Durchsätzen kerne ausreichende Stabilität der Schichtdicke gewährleistet.

US2003/0042126A1 beschreibt eine Bestrahlungsapparatur im Wesentlichen bestehend aus zwei konzentrischen Rohren. Hier kann die Schichtdicke aber nur begrenzt an die hier relevanten Aufgaben angepasst werden.

Allen bislang bekannten Lösungsvorschlägen ist gemein, dass diese keine enge Verweilzeitverteilung für das Prozessmedium realisieren und nur begrenzt für hohe Durchsätze eingesetzt werden können. Sehr viele bislang beschriebene Mikrophotoreaktoren setzen planare Bestrahlungszonen ein. Der Betrieb eines Photoreaktors mit Durchsätzen, die für eine Produktion von Chemikalien geeignet sind, führt allerdings bei der Verwendung von kleinen Kanälen unweigerlich zum Aufbau eines hohen Innendruckes auf die in der Regel transparente Abdeckung der Kanäle, die zur Einkoppelung der Strahlung verwendet wird. Dieser Druck beträgt z.B. bereits bei einer Durchflussrate von 10 ml/min und einer Bestrahlungszone mit den Dimensionen von 20 μm Dikke x 10 cm Breite x 10 cm Länge etwa 3,2 bar. Der Druckverlust in einer derartigen Anordnung hängt von der Viskosität des eingesetzten Mediums ab und steigt mit zunehmender Viskosität. Hier wurde eine dynamische Viskosität von 1.3 mPas angenommen. Der abgeschätzte Druck ist ausreichend, um zu einer Verformung von einer selbst 1 cm dicken Glasscheibe zu führen oder - bei nicht sachgerechtem Einbau - sogar zu einer Zerstörung der Glasscheibe zu führen. Eine Verformung wiederum bewirkt, dass die Dimensionen der Kanäle, insbesondere die optische Schichtdicke sich in nicht tolerierbarer Weise verändern und damit der besondere Vorteil eines Mikrophotoreaktors bei hohen Durchflussraten nicht genutzt werden kann.

Es gibt daher bislang keine photochemischen Reaktoren, die sich durch Bestrahlung in Mikrokanälen auszeichnen und für den Betrieb mit hohen Durchflussraten ausgelegt sind.

Zudem ist allen bislang bekannten Photoreaktoren gemeinsam, dass in Systemkomponenten unterschiedliche Volumenelemente des Prozessmediums unterschiedlich lange im Reaktionsraum verbleiben, so dass die Breite der Verweilzeitverteilung für die Reaktion sehr groß wird. Dies hat in der Regel zur Folge, dass für Volumenelemente, die nur vergleichsweise kurz im Reaktionsraum verbleiben, noch keine vollständige chemische Umsetzung erfolgt ist, während in anderen Volumenelementen, die z.B. in Totwasserzonen sehr lange im Reaktionsraum verbleiben, die erwünschte photochemische Umsetzung mangels Bestrahlung in den Totwasserzonen gar nicht abläuft oder sogar unerwünschte Folgereaktionen auftreten können. Optimale Werte für den Umsatz, die Selektivität und die Ausbeute der Reaktion lassen sich so kaum erreichen.

Aufgabe der vorliegenden Erfindung ist daher die Bereitstellung einer Vorrichtung, die die zuvor genannten Nachteile des Standes der Technik nicht aufweist.

Überraschenderweise wurde nun eine Vorrichtung zur Durchführung photochemischer Reaktionen in einem kontinuierlichen Prozess, enthaltend eine Reaktionszone mit Mikrokanälen gefunden, in denen die Schichtdicke des zu bestrahlenden Mediums in Bestrahlungsrichtung unabhängig vom fluidischen Druck konstant bleibt.

Gegenstand der Erfindung ist daher eine Vorrichtung, die vorzugsweise zur Durchführung photochemischer Reaktionen in einem kontinuierlichen Prozess eingesetzt wird enthaltend eine Reaktionszone mit Mikrokanäle, in denen die Schichtdicke des zu bestrahlenden Mediums in Bestrahlungsrichtung unabhängig vom fluidischen Druck konstant bleibt.

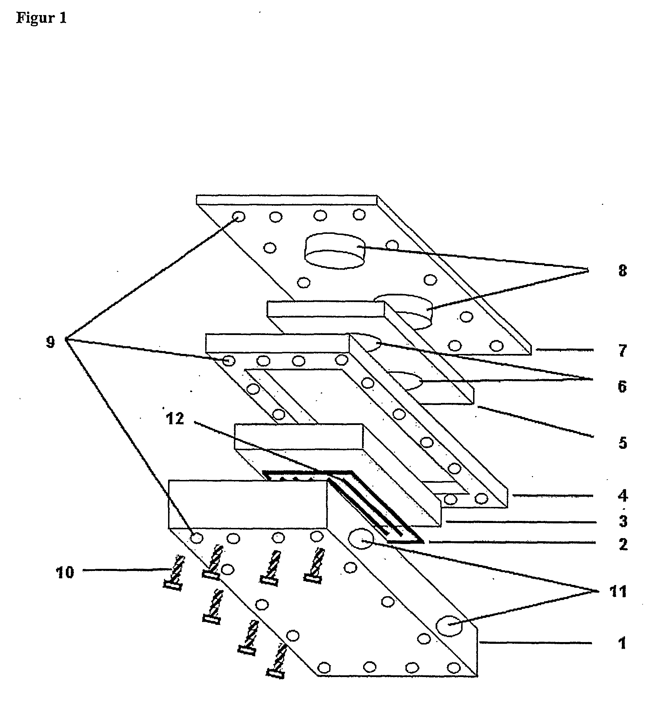

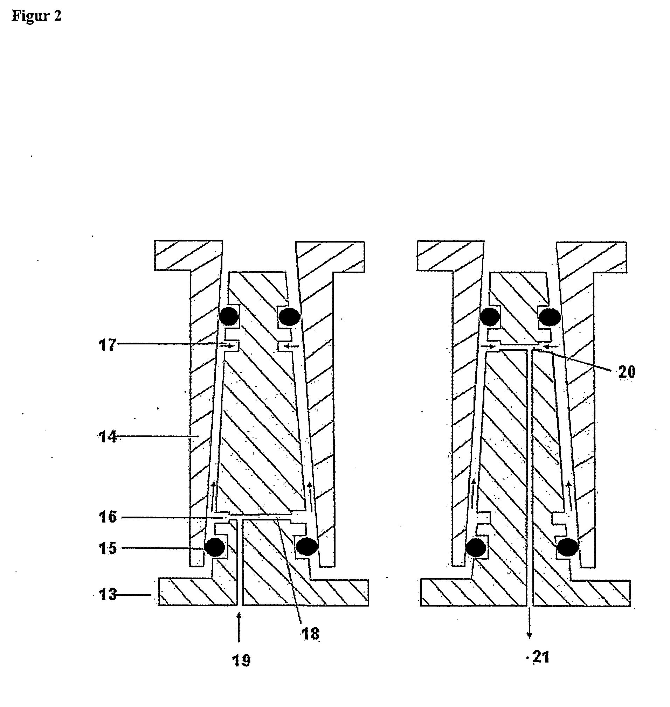

Die erfindungsgemäße Vorrichtung besitzt dabei vorzugsweise einen Aufbau gemäß der Figuren 1 oder 2. Gemäß Figur (1) enthält diese neben der für Photoreaktionen notwendigen Lichtquelle (Strahler), wie z.B. LED, Laser, Entladungslampen, vorzugsweise mindestens eine Reaktionszonenplatte (1) mit geeigneten Medienzu- und abführungen (11), mindestens ein Dichtungselement, wie z.B. O-Ring (2), eine transparente Abdeckung (3), eine befestigte Gummimatte als Stützelement (5) mit Aussparungen für die Strahler (6), und gegebenenfalls eine Halteplatte (7) für die Strahler (8).

Gemäß Figur 2 enthält die Vorrichtung diese neben der für Photoreaktionen notwendigen Lichtquelle dabei vorzugsweise mindestens einen rotationssymmetrischen Reaktionszonenkörper (13) mit geeigneten Medienzu- und abführungen (17-21), mindestens zwei Dichtungselemente, wie z.B. O-Ringe (15) und eine transparente Abdeckung (14). Bei der transparenten Abdeckung (14) handelt es sich vorzugsweise um ein konusartig bearbeitetes Rohr .

Die Lichtquelle ist vorzugsweise in beiden Fällen so angeordnet, dass von außen durch die transparente Abdeckung das Medium bestrahlt.

Bei dem zu bestrahlenden Medium handelt es sich vorzugsweise um bei Reaktionstemperatur flüssige oder gasförmige Stoffe. Dies umfasst auch bei Raumtemperatur feste Stoffe, die jedoch bei der Reaktionstempeatur den Aggregatzustand zu flüssig oder gasförmig ändern. Einsetzbar sind damit alle anorganischen oder organischen, bzw. auch metallorganischen Stoffe. Die Reaktionstemperatur liegt vorzugsweise im Bereich von -60 bis + 200 °C, besonders bevorzugt 0 - 30° C.

Die Mikrokanäle der Reaktionszone können dabei gerade, geschwungen, serpentinenartig oder gewinkelt verlaufen, wobei die Reaktionszone vorzugsweise von unten nach oben durch das Reaktionsfluid durchströmt wird (Steigfilm). Diese Kanäle haben vorzugsweise eine Breite von 10 μm bis 50 cm , bevorzugt 10 μm bis 25 cm, ganz besonders bevorzugt 10 μm bis 1000 μm.

Eine Ausführung setzt einen Film, der die Bestrahlungszone in einer Breite von vorzugsweise 1 bis 50 cm und entsprechender Schichtdicke durchströmt, ein. Diese Ausführung setzt besondere Anforderungen an das gleichmäßige Anströmen der Bestrahlungszone und sorgfältige technische Auslegung der Bestrahlungszone voraus, kommt aber ohne weitere Kompartimentierung aus.

Die Schichtdicke des zu bestrahlenden Mediums beträgt besonders bevorzugt 10 bis 1000 μm. Vorzugsweise bleibt die Schichtdicke des zu bestrahlenden Mediums innerhalb der Messgenauigkeit von ca. 1 μm über eine Ausdehnung der Bestrahlungszone von etwa 250 mm bei der erfindungsgemäßen Vorrichtung konstant.

In einer Ausführungsform der Erfindung ist die erfindungsgemäße Vorrichtung **dadurch gekennzeichnet, dass** die Reaktionszone durch transparentes Material abgedeckt ist, wobei dieses über mindestens ein Stützelement vorgespannt wird. Diese Vorspannung bewirkt bei der transparenten Platte den Aufbau eines Gegendrucks gegen den fluidischen Druck. Der Gegendruck hält die Platte in gewünschter Form und Position.

Vorzugsweise ist das transparente Material aus Glas (z.B. Quarzglas, Borosilikatglas oder andere) oder transparente Kunststoffe (z.B. PMMA, PVC, Polycarbonat, PET, PVDF, PTFE, PI), welches vorzugsweise in Form von Platten eingesetzt wird.

Stützelemente im Sinne der Erfindung sind dabei vorzugsweise elastische Materialien, wie Gummimatten oder -elemente, mechanische Elemente aus anderen geeigneten Werkstoffen vorzugsweise Metall oder Kunstoffen, die über eine geeignete Vorrichtung auf die transparente Abdekkung gedrückt werden. Eine gewisse Elastizität der Stützelemente sorgt dafür, dass eine möglichst homogene Vorspannung der Glasplatte erreicht wird.

Die erfindungsgemäße Vorrichtung zur Durchführung photochemischer Reaktionen in einem kontinuierlichen Prozess umfasst vorzugsweise eine Anordnung von Reaktionszonenplatte, in die Mikrokanäle zur Medienführung eingearbeitet sind oder in anderer Weise, wie z.B. durch Lithographie realisiert werden, eine transparente Abdeckung, ein oder mehrere elastische Stützelemente und geeignete Strahlquellen.

Auf diese Glasplatte werden dann vorzugsweise aus elastischem Material Platten aufgebracht, die

(i) die Glasplatte auf der dem Fluid abgewandten Seite stützt, einen Gegendruck aufbringt und damit Aufwölbungen verhindert, aber auch gleichzeitig

(ii) Aussparungen für die Einkopplung der Strahlung aufweist.

Die Aussparungen sind dabei vorzugsweise nur so groß, dass sie die Bestrahlungseinrichtung aufnehmen können bzw. die Strahlung ausreichend passieren kann.

Zur Realisierung der Mikrokanäle können diese entweder nach gängigen Verfahren mikrotechnisch in die Reaktionszonenplatte eingearbeitet werden oder in planaren und konischen Ausführungen können auch Abstandshalter, z.B. aus Drähten oder aus Metall- oder Kunststofffolien, z.B. in Ringen oder sonstigen Körpern, eingesetzt werden, die zwischen der transparenten Abdeckung und der Reaktionszonenplatte eingelegt werden. Die Metall- oder Kunststofffolien sind vorzugsweise chemisch inert und formstabil.

In einer bevorzugten Ausführung werden planare Reaktionszonenplatten eingesetzt, in denen die Mikrokanäle mit mikrotechnischen Fertigungsverfahren eingearbeitet sind oder aber durch den Einsatz eines oder mehrerer Abstandshaltern aus Metall oder Kunststoffen zu der transparenten Abdeckung realisiert werden. Es kann auch, sofern die Strömungsverhältnisse bei den eingesetzten Parametern es zulassen, eine breite Flüssigkeitsfront eingesetzt werden, die über die gewünschte geringe Schichtdicke verfügt, aber nicht lateral in einzelne Kanäle unterteilt ist. Bei dieser Ausführung besteht die Stützkonstruktion zur Erzeugung eines Gegendruckes aus einem Gitter, einer Matte mit geeigneten Aussparungen oder einzelnen Stützelementen aus elastischem Material, vorzugsweise elastomeren Kunststoffen (z.B. Viton, Gummi, Kautschuk, Silikon).

In einer weiteren bevorzugten Ausführungsform der Erfindung sind die Reaktionszone und die sie umgebende transparente Abdeckung so gestaltet, dass diese durch fluidischen Druck mechanisch nicht verformt werden können.

Dies kann beispielsweise dadurch erreicht werden, dass Reaktionszone und Abdeckung koaxial ausgeführt sind, siehe beispielsweise Figur 2.. Ebenfalls bevorzugt bestehen Reaktionszone und Abdeckung aus mehreren, aufrecht angeordneten, ineinander geschobenen konisch bearbeiteten Körpern und Rohren, wobei die durch den Abstand der beiden Körper definierte Schichtdicke durch die vertikale Verschiebung der beiden Elemente eingestellt wird.

Der äußere Körper besteht dabei vorzugsweise aus einem präzise bearbeiteten Quarzrohr zur Abdekkung der Fluidkanäle, der innere Körper vorzugsweise aus Metallen (z.B. Edelstahl, Titan, Nickelbasis-Legierungen). Durch vertikales Verschieben der aufrecht stehenden konischen Körper kann der Abstand zwischen den Körpern und damit die Schichtdicke des Reaktionsfluids bestimmt werden. Die Verschiebung kann durch einen geeigneten Mechanismus erfolgen.

Die koaxiale Anordnung kann ferner so ausgeführt werden, dass der innere Körper aus einem an mindestens einer Stelle eingeschlitzten Rohr gefertigt ist. Das Rohr ist am Schlitz mit einem Teflonstab nach außen gedichtet und kann über eine Klemmenanordnung präzise zusammengezogen werden. Auf diese Weise ist der Durchmesser des inneren Körpers variabel und sorgt für eine einstellbare Schichtdicke. Die Schichtdicke kann bei dieser Anordnung experimentell geprüft werden durch z.B. Einbringen eines chemischen Aktinometers geeigneter Wellenlängenempfindlichkeit und Konzentration.

In einer bevorzugten Ausführung befindet sich die Reaktionszone auf der Mantelfläche eines konisch geformten Körpers (Reaktionszonenkörper) aus bevorzugt Stahl oder Keramik und wird von einem transparenten Rohr in der Weise umgeben, dass die gewünschte Schichtdicke des Prozessmediums erreicht wird. Das Rohr und der Körper werden an den Enden durch geeignete Halterungen zentriert und mit Fluid versorgt. Zur Temperierung ist der Reaktionszonenkörper vorzugsweise mit Kanälen durchzogen, durch die das Temperiermedium geleitet werden kann. Die Temperatur des Körpers wird mit einem Temperatursensor gemessen. Die Bestrahlungsquellen sind dann vorzugsweise auf einem weiteren Rohr, das z.B. aus Kunststoff oder Stahl gefertigt werden kann, befestigt. Dieses Rohr wird über das transparente Rohr geschoben und zwischen den beiden Rohren die Stützelemente eingebracht. Die Stützelemente können aus Stegen bestehen, die der Länge nach auf der Außenseite des transparenten Rohres verteilt sind.

Als transparente Materialien für die Abdeckung der Reaktionszone werden in dieser Ausführungsform der Erfindung bevorzugt Gläser (z.B. Quarzglas, Borosilikatglas oder andere) oder transparente Kunststoffe (z.B. PMMA, PVC, Polycarbonat, PET, PVDF, PTFE, PI) in Form von bearbeiteten Rohren eingesetzt.

In allen beschriebenen Ausführungsformen der Erfindung ist bei den photochemischen Umsetzungen die Bestrahlungszeit nach den Bedürfnissen über die Änderung der Durchflussgeschwindigkeit des Prozessmediums und/oder durch Änderung der geometrischen Größe der Reaktionszone einstellbar.

Die erfindungsgemäßen Vorrichtungen zeichnen sich dadurch aus, dass diese vorzugsweise vom Reaktionsfluid entgegen der Schwerkraft durchströmt werden, wodurch eine enge Verweilzeitverteilung innerhalb der Vorrichtung erzeugt wird. Durch die erzwungene Strömung in geringer Schichtdicke entgegen der Schwerkraft (Steigfilm) wird dem Fluid ein Widerstand aufgeprägt, das zu der bekannten Haftwirkung an den Wänden hinzukommt und vor allem die üblicherweise parabolische Verteilung der Strömungsgeschwindigkeit in den kleinen Kanälen abflacht. Dadurch kommt es zur Ausbildung einer engen Verweilzeitcharakteristik.

Als Bestrahlungsquellen werden vorzugsweise organische oder anorganische Halbleiterlichtquellen wie Diodenlaser und Leuchtdioden oder deren Kombinationen verwendet. Ebenfalls einsetzbar sind Entladungslampen. Eine besonders bevorzugte Ausführung setzt Hochleistungs-LED-Anordnungen ein, die sich durch geringe spektrale Bandbreite, hohe Effizienz und kompakte Bauweise auszeichnen. Die insgesamt im Mikrophotoreaktor erreichbare Bestrahlungsdosis ergibt sich aus der Gesamtzahl der eingesetzten Bestrahlungsquellen und der in der Vorrichtung ausgenutzten Strahlungsleistung.

Durch die kompakten Bestrahlungsquellen ergibt sich eine Vorrichtung, die leicht bezüglich der erforderlichen Bestrahlungswellenlänge und -dosis an eine durchzuführende Synthese angepasst werden kann. Die erfindungsgemäße Vorrichtung erlaubt den leichten Aufbau eines Wellenlängenprofils entlang der Bestrahlungszone. So kann am Anfang bei einer bestimmten Wellenlänge oder in einem bestimmten Wellenlängenbereich bestrahlt werden, am Ende aber bei einer anderen. Auf diese Weise können photochemische Folgereaktionen oder mehrstufige Reaktionen optimal durchgeführt werden. Die Variation der Wellenlänge kann durch Einsatz verschiedener Strahlquellen aber auch bei Halbleiterlichtquellen (Laserdioden, Leuchtdioden) durch Variation der Kühltemperatur oder des Betriebsstromes erreicht werden, wobei letzteres zu einer wesentlich feineren Abstufung der Bestrahlungswellenlänge führt. Halbleiterlichtquellen zeigen in der Regel ein temperatur- und stromabhängiges Emissionsspektrum.

In einer weiteren Ausführungsform der Erfmdung können die Mikrokanäle in und außerhalb der Bestrahlungszone mit katalytischen aktiven Substanzen beschichtet ein Solche heterogenkatalytisch aktiven Beschichtungen können die photochemische Umsetzung selbst beeinflussen oder initiieren oder aber einen vor- oder nachgelagerten Reaktionsschritt betreffen.

Als katalytische aktive Substanzen sind verschiedene Metalloxide z.B. TiO2, Al2O3, SiO2, Zr02, Zeolithen, auf geeignete Träger immobilisierte organische Farbstoffe wie z. B. Phthalocyaninfarbstoffe oder Gemische der genannten Substanzen und Substanzklassen davon einsetzbar. Die Beschichtungen kann etwa durch Sol-Gel Verfahren aufgebracht werden.

Die Mikrokanäle in den planaren oder rotationssymmetrischen Vorrichtungen können auch durch zwischen der Abdeckung und der Reaktionszonenplatte eingelegte Drähte realisiert werden.

Schließlich können die Mikrokanäle auch in die Reaktionszonenplatte mit Hilfe mikrotechnischer Fertigungsverfahren eingearbeitet werden. Die Mikrokanäle selbst können gerade, geschwungen, serpentinenartig oder gewinkelt ausgeführt sein.

Serpentinen bieten besonders bei langen Bestrahlungszeiten Vorteile. Gewinkelte Mikrokanäle können so ausgestaltet werden, dass die diffusive Vermischung innerhalb der Mikrokanäle durch gezielte Umlenkung des Reaktionsfluids unterstützt wird. Dadurch können Fluidzonen, die am hinteren Ende des Kanals liegen, nach vom gebracht werden und so einer höheren Bestrahlungsdosis ausgesetzt werden.

Zwar sind photochemische Prozesse selbst in der Regel nur wenig temperaturabhängig, aber häufig kommt es zu Neben- oder Folgereaktionen, die eine Temperaturkontrolle erforderlich machen. Ferner besitzen viele Strahler eine signifikante Abstrahlung im infraroten Spektralbereich, die zu einer Aufwärmung vieler Medien führen kann. Die Temperierung der Reaktionszone in der Vorrichtung ist daher optional möglich. Bevorzugt erfolgt diese durch in die Platte oder den Zylinder eingebrachten Kanäle, in denen Temperierflüssigkeit zirkuliert werden kann. Die geringen eingesetzten Fluidschichten sorgen dabei für einen effektiven Wärmeübergang und die Temperatur kann sehr gut durch einen in die Reaktionszonenplatte oder den Reaktionszonenkörper eingebrachten Temperatursensor erfolgen. Durch geschickte Anordnung der Temperierkanäle können auch Temperaturprofile eingestellt werden, die die thermische Kontrolle möglicher Folge- und Nebenreaktionen erlauben.

In einer weiteren bevorzugten Ausführung der Vorrichtung enthält diese weitere mikroverfahrenstechnische Funktionselemente wie Mikromischer, Mikroseparatoren, Mikroreaktoren oder Mikrowärmetauscher etc., so dass ein sehr kompaktes chemisches Verarbeitungssystem mit einem photochemischen Bestrahlungsschritt entsteht.

Gegenstand der Erfindung ist zudem ein Verfahren zur Durchführung chemischer Reaktionen unter Einsatz der erfindungsgemäßen Vorrichtungen. Dieses Verfahren eignet sich dabei vorzugsweise für die Herstellung von Naturstoffen und Pharmawirkstoffen aus homogenen Ausgangslösungen ohne oder mit Feststoffanteilen mit gut definierter Partikelgrößen im Nanometerbereich, wie z.B. Caprolactam und Derivaten, Rosenoxid und ähnliche Geruchs- und Geschmackstoffe, isomerenreines Vitamin A und andere Olefine, halogenierte Verbindungen und viele mehr. Dabei sind jeweils die Bestrahlungsquellen, Materialien, Prozessparameter und Peripherie entsprechend zu wählen.

Gegenstand der Erfindung ist des weiteren die Verwendung der erfindungsgemäßen Vorrichtung zur Durchführung photochemischer Reaktionen, wie z.B. Photocyclisierungen, Photonitrosierungen, Photoisomerisierungen, Photohalogenierungen und Photooxidationen.

Ausführungsbeispiele der Erfindungen sind in den Zeichnungen dargestellt und werden im Nachfolgenden näher beschrieben ohne dabei limitierend zu wirken.

**Bezugszeichenliste**

1 Grundplatte mit Reaktionszone
2 O-Ring
3 Quarzglasplatte
4 Flanschfassung für Quarzglasplatte
5 Stützelement (Gummimatte)
6 Aussparungen für Strahler im Stützelement
7 Trägerplatte für Strahler
8 Strahler
9 Schraublöcher
10 Schrauben
11 Medienzu - und abführung
12 Abstandshalter aus Metall- oder Kunststofffolie
13 Konusförmiger Edelstahlzylinder mit Sockel
14 Konusförmiges Quarzrohr mit Sockel
15 O-Ring
16 Ringsum gefräste Nut zur Medienzuführung
17 Ringsum gefräste Nut zur Medienabfuhr
18 Innenliegende Bohrung zur Medienzufuhr
19 Medienzufuhr
20 Innenliegende Bohrung zur Medienabfuhr
21 Medienabfuhr

Figur 1 zeigt eine schematische Darstellung einer bevorzugten Ausführung der Vorrichtung mit planarer Reaktionszonenplatte (1). Die Vorrichtung besteht im Wesentlichen aus einer Reaktionszonenplatte (1) mit geeigneten Medienzu- und abführungen (11), einem O-Ring (2), der die Reaktionszone dichtet, einer Quarzglasplatte (3), einer Flanschfassung (4) zur Halterung der Quarzglasplatte, einer Gummimatte als Stützelement (5) mit Aussparungen für die Strahler (6), einer Halteplatte (7) für die Strahler (8). Die Vorrichtung wird mit geeigneten Schrauben (10) und Schraublöchern (9) in den Komponenten der Vorrichtung montiert. Die Mikrokanäle sind durch Abstandshalter aus Metall- oder Kunststofffolien (12) ausgeführt, die zwischen der Quarzglasplatte und der Reaktionszonenplatte eingelegt sind und über den Rahmen angepresst werden Unterschiedliche Schichtdicken des zu bestrahlenden Mediums werden durch Verwendung von Folien unterschiedlicher Dicke realisiert. Der Gegendruck wird auf die Quarzglasplatte durch die elastische Gummimatte (5)ausgeübt, die über einen Rahmen präzise angedrückt wird. Die Vorrichtung wird bevorzugt so aufgestellt, dass das zu bestrahlende Medium die Reaktionszonenplatte entgegen der Schwerkraft überströmt.

Figur 2 zeigt zwei ineinander übergehende Abschnitte (a) und (b) einer bevorzugten rotationssymmetrischen Ausführung der erfindungsgemäßen Vorrichtung zur Realisierung von einstellbaren Schichtdicken. Die Ausführung besteht im Wesentlichen aus einem an der Außenseite konisch geformten Edelstahlkörper (13), der zur Verbesserung der Standfestigkeit mit einem Sockel versehen sein kann, aus einem über (13) geschobenen, an der Innenseite konisch bearbeitetes Quarzrohr (14), das ebenfalls mit einem Sockel versehen sein kann, O-Ringe (15) zur Dichtung der beiden Körper (13) und (14). Die Körper (13) und (14) werden über Deckel zentriert und, wo nötig, gedichtet. Über die Deckel werden das Thermo- und das Reaktionsfluid zu- bzw. abgeleitet. Die Deckel sind in der Zeichnung nicht dargestellt. Die Führung des zu bestrahlenden Mediums durch die Vorrichtung wird anhand der Pfeile verdeutlicht. Durch die Medienzufuhr (19) und mindestens einer innenliegenden Bohrung im Edelstahlkörper (18) wird das Medium einer ringsum im Edelstahlkörper gefrästen Nut zugeführt (16), von der aus die Flüssigkeit in Zwischenraum zwischen (13) und (14) gelangt und nach oben strömt. In der ringsum gefrästen Nut (17) wird das bestrahlte Medium gesammelt und verlässt die Vorrichtung über mindestens einer Bohrung (20) und die Medienabfuhr (21). Die Schichtdicke des zu bestrahlenden Mediums wird definiert durch die Breite des Zwischenraums zwischen (13) und (14) und kann durch vertikales Verschieben von (13) und (14) gegeneinander verändert und den Erfordernissen angepasst werden. Dazu wird ein geeigneter Verstellmechanismus eingesetzt, der nicht in Figur 2 dargestellt ist. Zwischen (13) und (14) können auch Abstandselemente zur Erhöhung der Präzision der der Schichtdicke eingebracht sein.

**Patentansprüche**

1. Vorrichtung zur Durchführung chemischer Reaktionen, enthaltend eine bestrahlbare Reaktionszone mit Mikrokanälen, in denen die Schichtdicke des Reaktionsmediums in der möglichen Bestrahlungsrichtung unabhängig vom fluidischen Druck konstant bleibt, **dadurch gekennzeichnet, dass** die Reaktionszone (1) durch transparentes Material (3) abgedeckt ist, welches über mindestens ein Stützelement (5) vorgespannt ist und/oder Reaktionszone (13) und Abdeckung (14) aus mehreren, ineinander geschobenen koaxialen, konisch geformten Körpern und Rohren bestehen, bei denen die durch den Abstand der beiden Körper definierte Schichtdicke durch die Verschiebung der beiden Elemente entlang der gemeinsamen Rotationsachse eingestellt wird.

**2.** Verwendung der Vorrichtung nach Anspruch 1 zur Durchführung photochemischer Reaktionen.

## Claims

**1.** Device for carrying out chemical reactions, containing an exposable reaction zone with microchannels in which the layer thickness of the reaction medium in the possible exposure direction remains constant independently of the fluidic pressure, **characterized in that** the reaction zone (1) is covered by transparent material (3) which is tensioned via at least one support element (5) and/or the reaction zone (13) and covering (14) consist of a plurality of coaxial, conically shaped bodies and tubes fitted into one another, in which the layer thickness defined by the spacing of the two bodies is adjusted by displacing the two elements along the common rotation axis.

**2.** Use of the device according to Claim 1 for carrying out photochemical reactions.

## Revendications

**1.** Dispositif pour l'exécution de réactions chimiques, contenant une zone de réaction irradiable avec des microcanaux dans lesquels l'épaisseur de couche du milieu de réaction reste constante dans la direction possible de l'irradiation indépendamment de la pression fluidique, **caractérisé en ce que** la zone de réaction (1) est recouverte d'un matériau transparent (3), lequel est précontraint par l'intermédiaire d'au moins un élément d'appui (5) et/ou la zone de réaction (13) et le recouvrement (14) consistent en plusieurs corps de forme conique et tubes coaxiaux, glissés les uns dans les autres, chez lesquels l'épaisseur de couche définie par la distance des deux corps peut être réglée par le décalage des deux éléments le long de l'axe de rotation commun.

**2.** Utilisation du dispositif selon la revendication 1 à l'exécution de réactions photochimiques.

Figur 1

8
9
7
6
5
12
4
3
2
10
11
1

Figur 2

17
14
16
15
13
18
19
20
21

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10341500 A
- EP 1415707 A1
- DE 10209898 A1
- US 20030118486 A1
- EP 1400280 A1
- US 20040241046 A1
- US 20030042126 A1